# EUROPEAN PATENT SPECIFICATION

(11) **EP 2 532 265 B1**
(45) Date of publication and mention of the grant of the patent: **17.04.2019**
(21) Application number: 11169607.6
(22) Date of filing: 10.06.2011
(51) Int. Cl.: A45C 11/00, A45C 15/06, H04B 1/38

(54) **Light-collecting accessory for a computing device**
Lichtsammelzubehör für eine Recheneinrichtung
Accessoire de collecte de lumière pour un dispositif informatique

(43) Date of publication of application: 12.12.2012
(73) Proprietor: BlackBerry Limited, Waterloo, ON N2K 0A7 (CA)
(72) Inventor: Infanti, James Carl, Waterloo, Ontario N2L 3W8 (CA); Wun, Archer Chi Kwong, Mississauga, Ontario L4W 0B5 (CA); Steinhoff, William Stephen, Sunrise, FL 33323 (US)
(74) Representative: Bryn-Jacobsen, Caelia

(56) References cited:
- EP-A2- 1 457 941
- WO-A1-2011/090536
- GB-A- 2 381 986
- JP-A- 2000 210 113
- US-A1- 2005 231 939
- US-A1- 2007 159 808
- US-B1- 7 336 980

## Description

### FIELD OF TECHNOLOGY

The present disclosure relates generally to electronic devices. More specifically, the present disclosure relates to accessories for electronic devices.

### BACKGROUND

With the advent of more robust electronic systems, advancements of electronic devices are becoming more prevalent. Electronic devices can provide a variety of functions including, for example, telephonic, audio/video, and gaming functions. Electronic devices can include mobile stations such as cellular telephones, smart telephones, portable gaming systems, portable audio and video players, electronic writing or typing tablets, mobile messaging devices, personal digital assistants, and handheld computers. Additionally, as electronic devices advance, so must the accessories that accommodate the electronic devices.

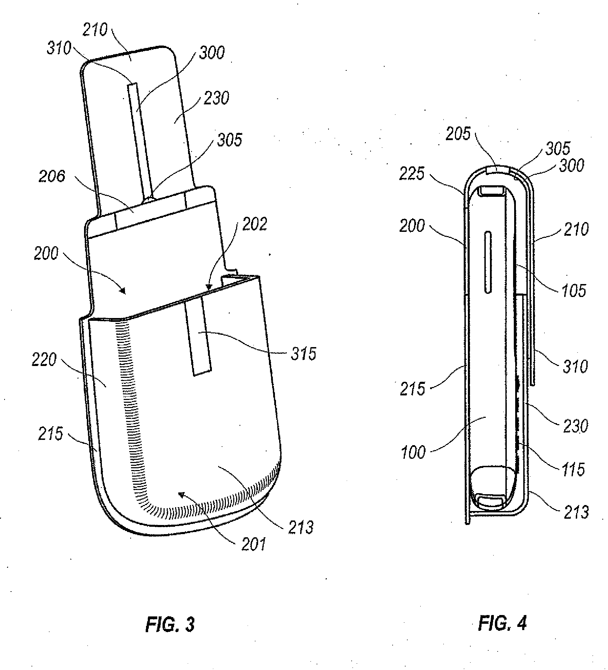

GB 2 381 986 relates to a mobile telephone apparatus comprises a folding casing which comprises at least an inner and outer layer wherein the inner layer is at least partially transparent and wherein at least part of the outer layer has one or more apertures coincident with a transparent portion of the inner layer; the apparatus further comprising a plurality of light scattering means provided in the region of the transparent portion of, the inner layer; and a plurality of light emitters eg. LEDS for providing light to the light scattering means. In a further embodiment (fig 4) the light emitters may be illuminated keys beneath a sliding keyboard cover.

JP 2000 210113 relates to an accessory comprising a holster for receiving a portable telephone. The holster comprises a transparent window in the form of a convex lens for magnifying information displayed on the screen of the portable telephone.

US 7 336 980 relates to an illuminated decorative cover for a device, and a cellular telephone having such a cover.

US 2005/231939 relates to a flexible, translucent polymer purse, to which a compact LED illumination unit is removably attachable for illuminating the exterior surface of the purse.

US 2007/159808 relates to a backpack with a cable that may be illuminated by means of an LED which is energised by a driver/controller.

The present invention is set out in the independent claims, with some optional features set out in the claims dependent thereto.

### BRIEF DESCRIPTION OF THE DRAWINGS

Implementations of the present application will now be described, by way of example only, with reference to the attached Figures, wherein:
Figure 1 is a perspective view of an exemplary electronic device receivable in a light-collecting accessory in accordance with the present technology;
Figure 2 is a perspective view of an exemplary electronic device received in a light-collecting accessory in accordance with an exemplary implementation of the present technology;
Figure 3 is a perspective view of a light-collecting accessory in accordance with an exemplary implementation of the present technology, showing a portion of the inner surfaces of the light-collecting accessory;
Figure 4 is a side view of an electronic device received in a light-collecting accessory in accordance with an exemplary implementation of the present technology, wherein a side panel of the light-collecting accessory has been cutaway;
Figure 5 is a perspective view of another light-collecting accessory in accordance with an exemplary implementation of the present technology, wherein the light-collecting accessory includes two light guides; and
Figures 6 is a view of the front of a light collecting-accessory in accordance with another exemplary implementation of the present technology, wherein the light collecting accessory houses an electronic device, and the arrangement of the light guides with respect to the electronic device are shown in phantom lines.

### DETAILED DESCRIPTION

It will be appreciated that for simplicity and clarity of illustration, where appropriate, reference numerals have been repeated among the different figures to indicate corresponding or analogous elements. In addition, numerous specific details are set forth in order to provide a thorough understanding of the implementations described herein. However, it will be understood by those of ordinary skill in the art that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this document will now be presented. The phrase "communicatively coupled" is defined as connected, whether directly or indirectly through intervening components and is not necessarily limited to physical connections. The term "electronic device" is defined as any electronic device that is capable of at least accepting information entries or commands from a user and includes its own power source. The term "light source" is defined as a component adapted to emit light. The term "collect" is defined as concentrating, focusing, directing, and redirecting. For example, collecting light can refer to concentrating or focusing light emitted from a light source or from a first location. Also, collecting light can refer to directing light from one location to another location. Similarly, collecting light can refer to redirecting light from one location to another location.

Electronic devices typically include light sources which are adapted to emit light, such as a flashing light, to provide a visual notification of an incoming message (for example, a telephone call, incoming message, an alarm, or other data and information which can be received by the electronic device). When an electronic device resides in a conventional accessory, the light source is typically obstructed or at least partially obstructed by portions of the conventional accessory. As the light source is obstructed, the light emitted by the light source can also be obstructed, which prevent the user of the electronic device from receiving the visual notifications of an incoming message. In other words, when the electronic device resides in a conventional accessory, visual notifications emitted from the light source may not be visible. As the visual notifications may not be visible through the accessory, a user can miss incoming messages or can fail to receive a contemporaneous notification of the incoming message when it is received by the electronic device residing in the accessory.

A light-collecting accessory for an electronic device is described and illustrated in the present disclosure. The light-collecting accessory disclosed herein can redirect light emitted from an electronic device residing in the accessory to an outer surface of the light-collecting accessory, thereby permitting visual notifications emitted from the electronic device to be visible at the outer surface of the light-collecting accessory.

A light-collecting accessory for an electronic device includes a housing having an outer surface and an inner surface. The housing can form an opening adapted to receive the electronic device. A light guide is communicatively coupled to the housing. The light guide can have a first end and a second end. The first end can be communicatively coupled to the outer surface of the housing. The second end can be communicatively coupled to the inner surface of the housing. In the event the electronic device resides in the opening of the housing, light emitted from the electronic device passes from the second end of the light guide to the first end of the light guide.

Other configurations and arrangements will be described below in relation to illustrated implementations. One of ordinary skill would appreciate that the elements from the illustrated implementations can be optionally included, combined, omitted, and arranged in various combinations to achieve the described benefits of the presently disclosed light-collecting accessory for an electronic device.

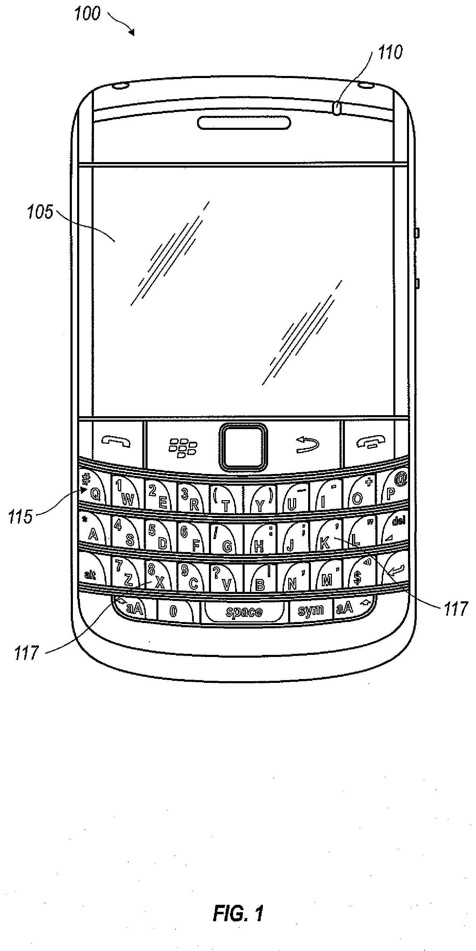

Figure 1 is a perspective view of the front of an exemplary electronic device 100 that can reside in a light-collecting accessory of the present disclosure. While the components of Figure 1 are not all inclusive, Figure 1 illustrates components that can be included on an electronic device 100 for a light-collecting accessory according to the present disclosure. Additional components are required to allow the mobile device 100 to function, but have been omitted for brevity and clarity. Figure 1 illustrates an electronic device 100 that is a mobile phone. However, those of ordinary skill in the art will appreciate that the electronic device 100 can also be an electronic pad, a portable computing device, a personal digital assistant, a mobile navigation device, or other electronic device that can emit light.

The illustrated electronic device 100 has a plurality of light sources. In Figure 1, the light sources include, for example, a display screen 105, an indicator light 110, and a keyboard 115. The display screen 105 can be a light crystal display (LCD), a light-emitting diode (LED) display, an active matrix organic light-emitting diode (AMOLED) display, a plasma display, or other display screen which can emit light and display visual information thereon. The indicator light 110 can be a light-emitting diode, a plurality of light-emitting diodes, and organize light-emitting diode, a quantum dot, an electron stimulated luminescence (ESL) lamp, a cathode ray tube, an electroluminescent wire, a solid state lighting element, or other light-emitting element which can provide visual notifications (for example, a blinking light, a flashing light, a light that can vary in brightness, or other visible notifications utilizing light). The keyboard 115 can be an illuminable keyboard 115 comprising a plurality of illuminable keys 117. The keyboard 115 can be a full keyboard 115, having twenty-six keys 117 each associated with an alphabetic indicia, as illustrated in Figure 1. Alternatively, the keyboard 115 can be a reduced keyboard, where at least one key 117 is associated with more than one alphabetic indicia. The keys 117 can be illuminable press-actuable keys, illuminable touch-sensitive keys, illuminable capacitive keys, or other similar illuminable key that allows for the input of data to a processor of the electronic device 100 upon user-engagement with the key 117. While Figure 1 illustrates three light sources 105, 110, 115, those of ordinary skill in the art will appreciate that the electronic device 100 can include fewer or more light sources than as illustrates, so long as the electronic device 100 includes at least one light source adapted to emit light when communicatively coupled to the electronic device 100. Those of skill in the art will also appreciate that light sources other than a display 105, an indicator light 110, and an illuminable keyboard 115 can be implemented. For example, other light sources can include an illuminable navigation tool, an illuminable function key, or other light source which can be communicatively coupled to the electronic device 100 and emit light.

The light source 105, 110, 115 can emit light to provide a user with visual notifications. The visual notifications can be indicative of an incoming message received by the electronic device 100. For example, the incoming message can be an email, a text message, a voice call, an instant message, a meeting notification, an alarm, an alarm clock, or any other message which the user of the electronic device 100 can be made aware of by a visual notification.

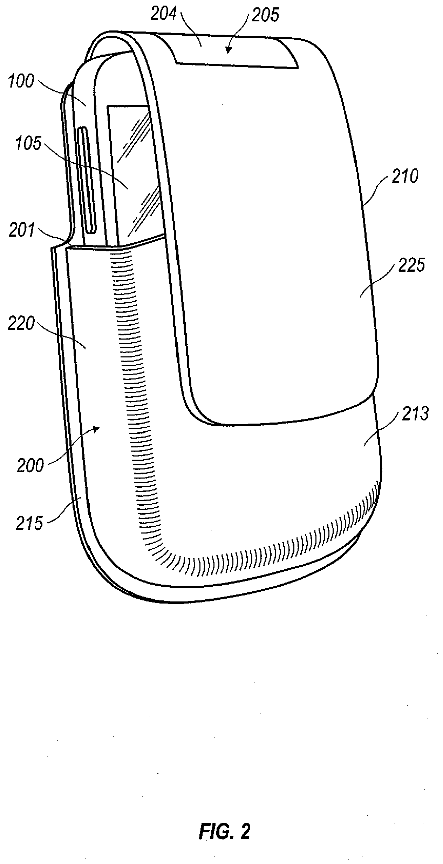

Figure 2 illustrates an exemplary light-collecting accessory 200 having an electronic device 100 residing therein. Figure 3 illustrates the light-collecting accessory 200 depicted in Figure 2 in an open configuration with the electronic device 100 removed from the light-collecting accessory 200. As illustrated in Figures 2 and 3, the light-collecting accessory 200 includes a housing 201. The housing 201 forms an opening 202 adapted to receive the electronic device 100. For example, as illustrated in Figures 2 and 3, the opening 202 can be a pocket formed in the housing. In the particular implementation illustrated in Figures 2 and 3, the housing 201 includes a first panel 210 (for example a flap), a second panel 213 (for example a front of the opening), a side panel 220, and a back panel 215. However, those of ordinary skill in the art will appreciate that the housing 201 can have fewer or more panels than as illustrated. Additionally, the panels 210, 213, 220, 215 can be integrated to form a uniform housing 201, for example a seamless packet, or a seamless holster.

Figure 2 illustrates an outer surface 225 of the housing 201. The outer surface 225 can be the exposed surface of the housing 201. Figure 3 illustrates the inner surface 230 of the housing 201. The inner surface 230 can face the electronic device 100 in the event the electronic device 100 resides in the housing 201.

A light guide 205 can be communicatively coupled to the housing 201, as illustrated in Figures 2 and 3. The light guide 205 can be a light collecting film, a substrate comprising a plurality of microprisms, an optical fiber, a plurality of optical fibers, or any other component which can collect light. The light guide 205 can comprise light-permeable material. For example, light-permeable material can be a plastic material, a polyethylene terephthalate (PET) film, a polyester film, a semi-transparent film, or a substantially transparent film.

In at least one implementation, such as illustrated in Figure 2, the light guide 205 is communicatively coupled to the outer surface 225 of the housing 201. In the particular implementation in Figure 2, the light guide 210 is communicatively coupled to the first panel 210 such that the light guide 205 is exposed at the outer surface 225. In at least one implementation, the light guide 205 comprises a first end 204 (shown in Figure 2) and a second end 206 (shown in Figure 3). For example, the first end 204 can be the exterior surface of the light guide 205, and the second end 206 can be the interior surface of the light guide 205. The first end 204 can be communicatively coupled to the outer surface 225 of the housing 201. The second end 206 can be communicatively coupled to the inner surface 230 of the housing 201. The light guide 205 is communicatively coupled to the housing 201 such that in the event the electronic device 100 resides in the opening 202, light emitted from the electronic device 100 passes from the second end 206 to the first end 204 of the light guide 205. In other words, the second end of 206 of the light guide 205 is communicatively coupled to the housing 201 such that the second end 206 can collect light emitted from the electronic device 100 (for example form a light source 105, 110, 115).

For example, in the illustrated implementation of Figures 2 and 3, the second end 206 of the light guide 205 is communicatively coupled to the display 105 of the electronic device 100. For example, the second end 206 can be communicatively coupled to the light source 105, 110, 115 by a light guide channel 300 as illustrated in Figures 3 and 4. The light guide channel 300 can be a light collecting film, a substrate comprising a plurality of microprisms, an optical fiber, a plurality of optical fibers, or any other component which can collect light. The light guide 205 can comprise light-permeable material. For example, light-permeable material can be a plastic material, a polyethylene terephthalate (PET) film, a polyester film, a semi-transparent film, or a substantially transparent film. As illustrated in Figure 3, the light guide channel 300 is communicatively coupled to the inner surface 230 of the housing 201. In the illustrated implementation, the light guide channel 300 can include a first end 305 communicatively coupled the light guide 205 (for example the second end 206 of the light guide 205). The light guide channel 300 can also include a second end 310 adapted to align with a light source 105, 110, 115 of an electronic device 100 in the event the electronic device 100 is received in the housing 200. As the second end 310 is adapted to align with the light source 105, 110, 115, the light guide channel 300 is adapted to direct light emitted from the light source 105, 110, 115 to the light guide 205.

As the light guide channel 300 communicatively couples the light guide 205, which is exposed at the outer surface 225 of the housing 200, to the light source 105, 110, 115 of the electronic device 100 in the event the electronic device resides in the housing 200, the light guide 205 can be communicatively coupled on a panel 210, 220, 215, of the housing different from the panel 230 having an inner surface 300 that faces the light source 105, 110, 115 when the electronic device 100 resides in the housing 200.

For example, in the particular implementation illustrated in Figures 2-4, the light guide 205 is integrated into the first panel 210 of the housing, and the panel 213 having an inner surface facing the light source 105, 110, 115 is in a plane different from the plane having the first panel 210. The light guide channel 300 is communicatively coupled to the inner surface 230 of the first panel 210 and is adapted to couple the light guide 205 and the light source 105, 110, 115 of the electronic device 100 received in the accessory 200. Additionally, in Figure 3, the panel 213 having an inner surface that will face the light source 105, 110, 15 in the event the electronic device 100 is received in the accessory, includes an aperture 315 defined in the panel 213. The aperture 315 is oriented to align with at least a portion of the second end 310 of the light guide channel 300. For example, the aperture 315 illustrated in Figure 3 is shaped to correspond to and align with the light guide channel 300, when the first panel 210 is positioned substantially parallel to the panel 213, thereby placing the accessory 200 in a closed configuration. As the aperture 315 is adapted to align with the light guide channel 300, the second end 310 of the light guide channel 300 can be exposed to and align with the light source 105, 110, 115 of the electronic device 100 in the event the electronic device resides in the housing 200.

While Figure 3 illustrates an aperture 315 adapted to align with at least a portion of the second end 310 of the light guide channel 300, a second light guide channel could be communicatively coupled to the panel 213. In such an implementation, the second light guide channel can be communicatively coupled to the panel 213 and shaped similar to the aperture 315 illustrated in Figure 3. The second light guide channel can further be adapted to collect light from the light source 105, 110, 115 of the electronic device 100. The second light guide channel can also be communicatively coupled to the second end 310 of the first light guide channel 300 in the closed configuration (in which the first panel 210 is positioned exteriorly to the panel 213 such that the first panel 210 is substantially parallel with the panel 213). Thus, when an electronic device 100 is received in the accessory 100, light emitted from the electronic device 100 passes to the second light guide channel. The light then passes from the second light guide channel to the second end 310 of the light guide channel 300. The light then passes from the second end 310 of the light guide channel to the second end 206 of the light guide 205. Light then passes from the second end 206 of the light guide 205 to the first end 204 of the light guide 205, which is exposed at the outer surface 225 of the housing, thereby permitting light emitted by the electronic device 100, residing in the opening 202 of the accessory 200 to be visible to a user.

Figure 4 further illustrates the orientation of the light guide 205, light guide channel 300, and a light source 105 of an electronic device 100 residing in the accessory, in accordance with an exemplary implementation of the present technology. In Figure 4, an electronic device 200 resides in the housing 201 of the accessory 200. The inner surface 230 of the first panel 210 and the second panel 213 face the light sources 105, 115 of the electronic device 100. As illustrated in Figure 4, the second end 310 of the light guide channel 300 is oriented to align with the light source 105 of the electronic device 100. The first end 305 of the light guide channel 300 is communicatively coupled to the light guide 305 which is exposed at the outer surface 225 of the accessory 200. Thus, in Figure 4, light emitted from the light source 105 passes to the light guide channel 300 to the light guide 205, thereby making the light visible at the outer surface 225 of the accessory 200.

While Figure 4 illustrates the light guide channel 300 communicatively coupled to the first panel 210 of the housing 201, the light guide channel 300 can be communicatively coupled to other portions of the housing 201, so long as the light guide channel 300 communicatively couples the light guide 205 to the inner surface 230 of the housing 201 such that light emitted from a light source 105, 110, 115 of an electronic device 100 can pass through the light guide channel 300 to the light guide 205. For example, the light guide channel 300 can be communicatively coupled to the inner surface 230 of the front panel 213 and the back panel 215. In other words, the second end 310 light guide channel 300 can be coupled to the inner surface 230 of the front panel, and the first end 305 of the light guide channel 300 can be coupled to the second end 206 of the light guide 205, where the intermediate portion of the light guide channel 300 between the first end 305 and the second end 310 are traverse the front panel 213 and the back panel 215. In other implementations, the light guide 205 can be communicatively coupled a panel 213, 215, 220 different from the first panel 210, and the light guide channel 300 can be communicatively coupled to panels other than the front panel 213, so long as the light guide channel 300 can communicatively couple the light guide 205 to the inner surface 230 of the housing 201 that such that light emitted from a light source 105, 110, 115 of an electronic device 100 can pass through the light guide channel 300 to the light guide 205, in the event the electronic device 100 resides in the housing.

In Figures 2-4, the light guide 205 is integrated into with housing 201 such that the light guide 205 is exposed at the outer surface 225 of the housing 201. For example, an aperture can be defined in the housing 201 and the light guide 205 can be inserted into the aperture. In other implementations, the light guide 205 can be sewn, adhered, layered, affixed, or otherwise communicatively coupled to the housing 201 such that the light guide 205 is exposed at the outer surface 225 of the housing 201, whereby light emitted from the electronic device 100 can be directed to the light guide 205. Therefore, the light directed from the electronic device 100 to the light guide 205 is made visible to user, thereby allowing visual notifications emitted from the electronic device 100 to be seen from or at the accessory 200 in the event the electronic device 100 resides in the accessory 200. Although Figures 2 and 3 illustrate the light guide 205 communicatively coupled to a portion of a panel 210 of the housing 201, the light guide can be communicatively coupled to an entire panel 210, 220, 215, 213 of the housing 201.

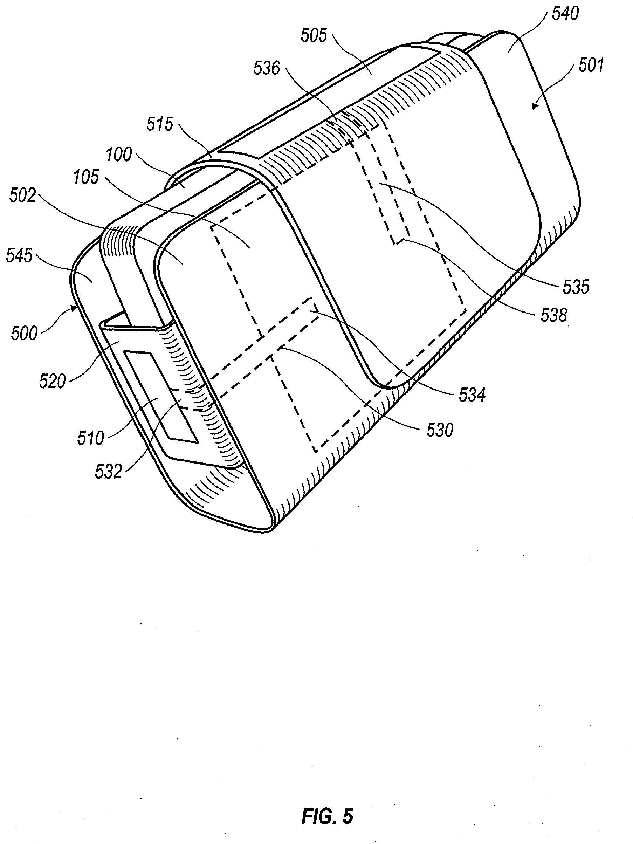

While the implementation of Figures 2-4 illustrate an accessory 200 having one light guide 205, in other implementations, the accessory 200 can have a plurality of light guides 205. For example, Figure 5 illustrates an accessory 500 having two light guides 505, 510. More specifically, the accessory 500 illustrated in Figure 5 includes a housing 501 having and outer surface 540 and an inner surface 545. The housing 501 also includes a first panel 515 (for example a flap), a second panel 520 (for example a side panel), and a third panel 502 (for example a front panel). A first light guide 505 is communicatively coupled to the first panel 515. The first light guide 505 includes a first end 507 and a second end (not shown). For example, the first end 507 can be the exterior surface of the light guide, and the second end can be the interior surface of the light guide. A second light guide 510 is communicatively coupled to the second panel 520 of the housing 501. Similar to the first light guide 505, the second light guide 510 can have a first end 512 and a second end (not shown).

In Figure 5, an electronic device 100 having a light source 105 (for example, a display screen) resides in the accessory 500. The light source 105 is shown in phantom or dashed lines to indicate that the light source 105 is concealed by the third panel 502 of the housing 501 of the accessory 500. The inner surface (not shown) of the third panel 502 is oriented to face the light source 105.

In Figure 5, a first light guide channel 535 communicatively couples the first light guide 505 to the inner surface of the third panel 502, thereby permitting light emitted from the light source 105 to pass from light guide 535 to the first light guide 505. The first light guide channel 535 is shown in phantom lines as the first light guide channel 535 is communicatively coupled to the inner surface 545 of the housing 501. More specifically, the first light guide channel 535 is communicatively coupled to the inner surface 545 of the housing. The first light guide channel 535 includes a first end 536 communicatively coupled to the second end of the first light guide 505. The first light guide channel 535 also includes a second end 538 oriented to align with the light source 105 of an electronic device 100 in the event the electronic device 100 resides in the housing 501. Similarly, a second light guide channel 530 communicatively couples the second light guide 510 to the inner surface of the third panel 502. The second light guide 530 is shown in phantom lines as the second light guide 530 is communicatively coupled to the inner surface 545 of the housing 501. The second light guide channel 530 includes a first end 532 communicatively coupled to the second end of the second light guide 510. The second light guide channel 530 also includes a second end 534 oriented to align with the light source 105 of an electronic device 100 in the event the electronic device 100 resides in the housing 501. Thus, in the event an electronic device 100 emits light, light will pass from at least one of the first light guide channel 535 and the second light guide channel 530 to the respective first light guide 505 and the second light guide 510. In other words, the light guide channels 530, 535 redirect light emitted from an electronic device 100 residing in the housing 501 of the accessory to a light guide 505, 510 exposed at the outer surface 540 of the accessory 500, thereby allowing visual notifications emitted by the light source 105 to be seen.

As the accessory illustrated in Figure 5 includes two light guides 505, 510, the use can still view light emitted from the light source from multiple panels or sides of the housing 501. For example, if the user clips the accessory to his waistband with the first panel 515 facing upwards to him, the user will be able to receive visual notifications emitted by the light source 105 of the electronic device 100. If the user places the accessory 500 with the electronic device 100 housed in the accessory 500 in a briefcase, in a shirt pocket, on a desk or orients the accessory 500 on a surface such that the second panel 510 faces the user, the second light guide 510 allows the user to receive and view visual notifications emitted by the light source 105 of the electronic device 100. Thus, by communicatively coupling multiple light guides 505, 510 on the housing 501 of the accessory, the user can receive visual notifications from various panels of the housing 501. Also, the user can still receive visual notifications from the light guides 505, 510 even if the orientation of the accessory with respect to the user's line of vision changes.

Additionally, by the light guides 505, 510 can each be associated with a particular light source 105. For example, the first light guide 505 can be communicatively coupled to the inner surface of the 545 of the accessory housing 501 such that light emitted from the display passes from the display to the light guide 505. The second light guide 510 can be communicatively coupled to the inner surface 545 of the accessory housing 501 such that light emitted from a light source different from the display 105 associated with the first light guide 505 (for example, the illuminable keyboard or light indicator) passes from the light source to the second light guide 510. In such an implementation, a user will be able to receive visual notifications from multiple light sources of the electronic device 100 in the event the electronic device 100 resides in the accessory. While the illustrated implementation of Figure 5 shows two light guides 505, 510, those of ordinary skill in the art will appreciate that the accessory 500 can include fewer or more light guides 505, 510 than illustrated.

Figure 5 illustrates each light guide 505, 510 having an associated light guide channel 530, 535; however, in some implementation, a light guide 505, 510 can be communicatively coupled to a plurality of light guide channels 535, 530. For example, the light guide 505 can be communicatively coupled to two light guide channels. The first light guide channel can be communicatively coupled to the second end of the light guide 505 and can be oriented on the inner surface 545 of the housing 501 such that light emitted from a first light source, for example the display 105 of an electronic device, passes from the light guide channel to the light guide 505, in the event the electronic device resides in the housing 501. A second light guide channel can also be communicatively coupled to the light guide 505 and can be oriented on the inner surface of the housing 501 such that light emitted from a second light source, for example a light indictor 115 of the electronic device, passes from the second light guide channel to the light guide 105, in the even the electronic device resides in the housing 501. Thus, in such implementations, the user can receive visual notifications emitted from multiple light sources at a light guide exposed at the outer surface 540 of the housing 501.

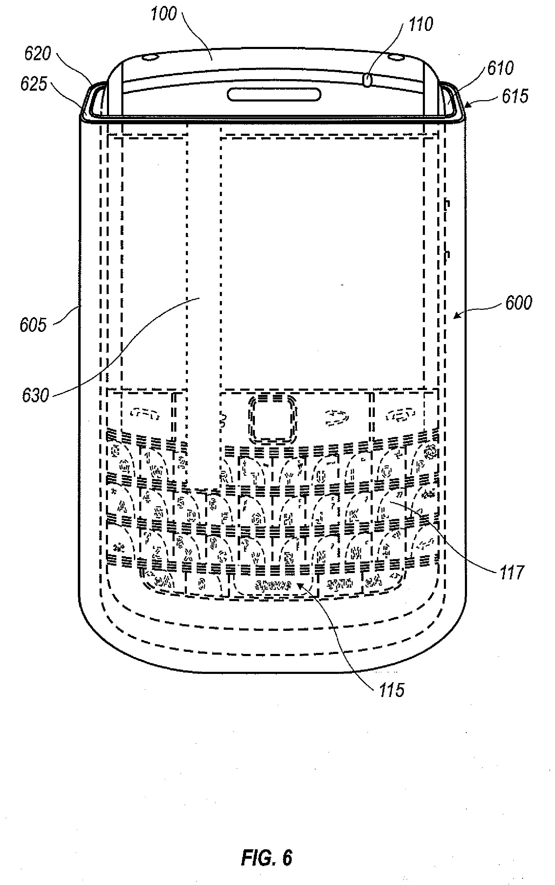

While Figures 2-5 illustrate an accessory 200, 500 that is a holster, those of ordinary skill in the art will appreciate that the accessory can be a pocket-type accessory, a sleeve, an electronic case or other housings for electronic device 100, for example as shown in Figure 6. Those of skill in the art will also appreciate that the accessory 200, 500 can also be a docking station, an accessory clip, or any other accessory which can receive an electronic device 100.

Figure 6 illustrates an accessory 600 that is a sleeve or pouch. The accessory 600 includes a housing 605 forms an opening 610 adapted to receive an electronic device 100. In Figure 6, the opening 610 is formed at a first panel 615 or top portion of the housing 605. The first panel 615 can be perpendicular to a user's body when the accessory 600 is worn or clipped onto a user's body (for example, clipped to a user's belt). The first panel 615 can also be perpendicular to the electronic device 100 when the electronic device 100 resides in the housing 605. As illustrated in Figure 6, the first panel 615 includes an edge 620 that forms the perimeter of the opening 610. In the implementation of Figure 6, the accessory 600 includes a light guide 625 exposed at the edge 620. Similar to the implementations illustrated in Figures 2-5, the light guide 625 includes a first end exposed at the outer surface of the edge 620 and a second end that is communicatively coupled to an inner surface (not shown) of the accessory 600 and communicatively coupled to a light source 110, 115 of the electronic device 100. For example, in Figure 6, the light guide 625 can comprise a first surface comprising the first end exposed at the edge 620 and a second surface comprising the second end coupled to the interior of the accessory 600 and oriented to be parallel to the indicator light 110. Thus, when the indicator light 110 emits light, the second end of the light guide 625 can collect the emitted light and enable the light to pass from the second end to the first end of the light guide 625. In at least one implementation, the accessory 600 can include a light guide channel 630 coupled to the second end of the light guide 625. The light guide channel 620 can direct light from another light source of the electronic device 100 (for example, the illuminable keyboard 115) to the first end of the light guide 625, thereby making visual notifications emitted by the illuminable keyboard 625 visible when the electronic device 100 resides in the accessory 600. Thus, the accessory illustrated in Figure 6 enable light emitted from a light source of an electronic device 100 to be redirected to an exposed surface of the accessory by the light guide 625. In the particular implementation of Figure 6, light emitted from the electronic device 100 will illuminate the edge 620 of the accessory 600, thereby informing a user of an incoming message or other visual notification emitted by the electronic device 100. While the accessory 600 illustrated in Figure 6 includes a light guide 625 which can emit light from more than one light source 110, 115 of the electronic device 100, those of ordinary skill in the art will appreciate that the light guide 625 can be oriented and adapted to redirect light emitted form one light source. Additionally, while the accessory 600 illustrated in Figure 6 illustrates a light guide 625 coupled to top edge 620 of the accessory, those of ordinary skill in the art will appreciate that the light guide 625 can be coupled on other surfaces and edges of the accessory 600 and can include more than one light guide and fewer or more light guide channels 630 than illustrated.

The present disclosure describes a light-collecting accessory 200, 500 for an electronic device 100. The light-collecting accessory 200, 500 includes a light guide 205, 305, 310 exposed at the outer surface 225, 540 of the accessory 200, 500. The light guide 205, 305, 310 comprises a first end exposed at the outer surface and a second end that is communicatively coupled to the inner surface 230, 545. In the event the electronic device 100 resides in the housing 201, 501 of the accessory, light emitted from the electronic device 100 passes from the second end to the first end of the light guide 20, 305, 310, thereby allowing visual notifications emitted by the electronic device 100 to be seen by the user, even when the accessory 200, 500 conceals or obstructs the light sources of the electronic device 100. Additionally, with the light-collecting accessory 200, 500, additional components, such as a light source, power source, or electrical interface for the accessory 200, 500 is not necessary to direct or redirect visual notifications emitted by the electronic device 100 to be seen at the accessory 200, 500.

Exemplary implementations have been described hereinabove regarding an electronic device having a concealed keyboard However, one of ordinary skill in the art will appreciate that the concealed keyboard can be implemented on other devices, such as handheld computing devices, PDAs, cellphones, or other mobile devices utilizing keyboard, keypads, or switch panels to input data to the mobile device. One of ordinary skill in the art will also appreciate that the elements and features illustrated in the implementations described and illustrated in the figures herein can be optionally included to achieve the benefits of the presently disclosed electronic device having a concealed keyboard. Additionally, those skilled in the art will appreciate that features in each of the figures described herein can be combined with one another and arrange to achieve the described benefits of the presently disclosed electronic device having a concealed keyboard. Various modifications to and departures from the disclosed implementations, falling within the scope of the invention as defined by the appended claims, will occur to those having skill in the art.

## Claims

1. An accessory (100) for a computing device (100) having a light source (110, 105, 115) comprising:
a holster (201) forming an opening (202) adapted to receive the computing device (100);
a light guide (205) having a first end (204) that is communicatively coupled to an outer surface (225) of the holster (201) and a second end (206) that is communicatively coupled to an inner surface (230) of the holster (201), wherein the light guide (105) is integrated into the holster such that the light guide is exposed at the outer surface (225) of the holster (201); and
a plurality of light guide channels (300) communicatively coupled to the inner surface (230) of the holster (201), each light guide channel (300) being communicatively coupled to the second end (206) of the light guide (205), wherein in the event the computing device (100) resides in the holster (201), light emitted from the computing device (100) passes from at least one of the light guide channels (300) to the second end (206) of the light guide (205), and passes from the second end (206) of the light guide (205) to the first end (204) of the light guide (205).

2. The accessory of claim 1, wherein the light guide (105) is at least one of a light collecting film, a substrate comprising a plurality of microprisms, and an optical fiber.

3. The accessory of any one of the preceding claims, wherein the light guide (105) comprises light-permeable material.

4. The accessory of claim 3, wherein the light permeable material is one of a plastic material, a polyethylene terephthalate film, a polyester film, and a semi-transparent film.

5. The accessory of any one of the preceding claims, wherein an aperture (315) is defined in the holster (201) and the light guide (105) is insertable into the aperture (315).

6. The accessory of claim 1, wherein the light guide channel (300) comprises a plurality of microprisms adapted to collect light emitted from the light source (105, 110, 115) and direct the collected light to the light guide (105).

7. The accessory of any one of the preceding claims, wherein the light guide (205) is a plurality of light guides each having:
a first end (204) that is communicatively coupled to the outer surface (225) of the holster (201), and
a second end (206) that is communicatively coupled to the inner surface (230) of the holster (201).

8. The accessory of any one of the preceding claims, wherein the holster (201) includes:
a first panel (210) having an exterior surface (225) and being in a first plane of the holster (201); and
a second panel (213) having an interior surface (230) and being in a second plane different from first plane; and
wherein the light guide (205) is exposed at the exterior surface (225), and the first end (204) is communicatively coupled to the first panel (210) and the second end (206) is communicatively coupled to the interior surface (230) of the second panel (213).

9. The accessory of claim 8, wherein the first panel is in a first plane oriented perpendicular to the second plane.

10. A system for directing light emitted from an electronic device (100) to an accessory (200), the system comprising:
an electronic device (100) comprising a light source (105, 110, 115); and
the accessory (200) as recited in any one of the preceding claims, the accessory (200) adapted to receive the electronic device (100).

11. The system of claim 10, wherein the light source is one of a display screen (105), an illuminable keyboard (115), and a light emitting diode (110) communicatively coupled to the electronic device (100).

## Patentansprüche

1. Zubehör (100) für eine Rechenvorrichtung (100) mit einer Lichtquelle (110, 105, 115), das Folgendes umfasst:
ein Holster (201), das eine Öffnung (202) bildet, die zum Empfangen der Rechenvorrichtung (100) eingerichtet ist;
einen Lichtleiter (205) mit einem ersten Ende (204), das kommunikativ mit einer Außenoberfläche (225) des Holsters (201) gekoppelt ist, und ein zweites Ende (206), das kommunikativ mit einer Innenoberfläche (230) des Holsters (201) gekoppelt ist, wobei der Lichtleiter (105) so in das Holster integriert ist, dass der Lichtleiter an der Außenoberfläche (225) des Holsters (201) freiliegt; und
mehrere Lichtleiterkanäle (300), die kommunikativ mit der Innenoberfläche (230) des Holsters (201) gekoppelt sind, wobei jeder Lichtleiterkanal (300) kommunikativ mit dem zweiten Ende (206) des Lichtleiters (205) gekoppelt ist, wobei bei dem Ereignis, dass sich die Rechenvorrichtung (100) in dem Holster (201) befindet, Licht, das von der Rechenvorrichtung (100) emittiert wird, von wenigstens einem der Lichtleiterkanäle (300) zu dem zweiten Ende (206) des Lichtleiters (205) hindurchgeht und von dem zweiten Ende (206) des Lichtleiters (205) zu dem ersten Ende (204) des Lichtleiters (205) hindurchgeht.

2. Zubehör nach Anspruch 1, wobei der Lichtleiter (105) ein Lichtsammlungsfilm und/oder ein Substrat, das mehrere Mikroprismen umfasst, und/oder eine optische Faser ist.

3. Zubehör nach einem der vorhergehenden Ansprüche, wobei der Lichtleiter (105) ein lichtdurchlässiges Material umfasst.

4. Zubehör nach Anspruch 3, wobei das lichtdurchlässige Material ein Kunststoffmaterial, ein Polyethylenterephthalatfilm, ein Polyesterfilm oder ein semitransparenter Film ist.

5. Zubehör nach einem der vorhergehenden Ansprüche, wobei eine Apertur (315) in dem Holster (201) definiert ist und der Lichtleiter (105) in die Apertur (315) einsetzbar ist.

6. Zubehör nach Anspruch 1, wobei der Lichtleiterkanal(300) mehrere Mikroprismen umfasst, die dazu eingerichtet sind, von der Lichtquelle (105, 110, 115) emittiertes Licht zu sammeln und das gesammelte Licht zu dem Lichtleiter (105) zu lenken.

7. Zubehör nach einem der vorhergehenden Ansprüche, wobei der Lichtleiter (205) aus mehreren Lichtleitern besteht, die jeweils Folgendes aufweisen:
ein erstes Ende (204), das kommunikativ mit der Außenoberfläche (225) des Holsters (201) gekoppelt ist, und
ein zweites Ende (206), das kommunikativ mit der Innenoberfläche (230) des Holsters (201) gekoppelt ist.

8. Zubehör nach einem der vorhergehenden Ansprüche, wobei das Holster (201) Folgendes beinhaltet:
ein erstes Panel (210), das eine Außenoberfläche (225) aufweist und in einer ersten Ebene des Holsters (201) liegt; und
ein zweites Panel (213), das eine Innenoberfläche (230) aufweist und in einer zweiten Ebene, die von der ersten Ebene verschieden ist, liegt; und
wobei der Lichtleiter (205) bei der Außenoberfläche (225) freiliegt und das erste Ende (204) kommunikativ mit dem ersten Panel (210) gekoppelt ist und das zweite Ende (206) kommunikativ mit der Innenoberfläche (230) des zweiten Panels (213) gekoppelt ist.

9. Zubehör nach Anspruch 8, wobei sich das erste Panel in einer ersten Ebene befindet, die senkrecht zu der zweiten Ebene orientiert ist.

10. System zum Lenken von Licht, das von einer elektronischen Vorrichtung (100) emittiert wird, zu einem Zubehör (200), wobei das System Folgendes umfasst:
eine elektronische Vorrichtung (100), die eine Lichtquelle (105, 110, 115) umfasst; und
das Zubehör (200) nach einem der vorhergehenden Ansprüche, wobei das Zubehör (200) dazu eingerichtet ist, die elektronische Vorrichtung (100) zu empfangen.

11. System nach Anspruch 10, wobei die Lichtquelle ein Anzeigebildschirm (105), eine beleuchtbare Tastatur (115) oder eine Leuchtdiode (110), die kommunikativ mit der elektronischen Vorrichtung (100) gekoppelt ist, ist.

## Revendications

1. Accessoire (100) pour un dispositif informatique (100) ayant une source de lumière (110, 105, 115) comprenant :
un étui (201) formant une ouverture (202) adaptée pour recevoir le dispositif informatique (100) ;
un guide de lumière (205) ayant une première extrémité (204) qui est couplée de façon communicante à une surface externe (225) de l'étui (201) et une deuxième extrémité (206) qui est couplée de façon communicante à une surface interne (230) de l'étui (201), le guide de lumière (105) étant intégré dans l'étui de telle sorte que le guide de lumière est exposé à la surface externe (225) de l'étui (201) ; et
une pluralité de canaux guides de lumière (300) couplés de façon communicante à la surface interne (230) de l'étui (201), chaque canal guide de lumière (300) étant couplé de façon communicante à la deuxième extrémité (206) du guide de lumière (205), dans lequel, dans le cas où le dispositif informatique (100) se trouve dans l'étui (201), la lumière émise depuis le dispositif informatique (100) passe d'au moins un des canaux guides de lumière (300) à la deuxième extrémité (206) du guide de lumière (205), et passe de la deuxième extrémité (206) du guide de lumière (205) à la première extrémité (204) du guide de lumière (205).

2. Accessoire de la revendication 1, dans lequel le guide de lumière (105) est au moins un élément parmi un film collectant la lumière, un substrat comprenant une pluralité de microprismes, et une fibre optique.

3. Accessoire de l'une quelconque des revendications précédentes, dans lequel le guide de lumière (105) comprend un matériau perméable à la lumière.

4. Accessoire de la revendication 3, dans lequel le matériau perméable à la lumière est un élément parmi un matériau plastique, un film de téréphtalate de polyéthylène, un film de polyester, et un film semi-transparent.

5. Accessoire de l'une quelconque des revendications précédentes, dans lequel une ouverture (315) est définie dans l'étui (201) et le guide de lumière (105) peut être inséré dans l'ouverture (315).

6. Accessoire de la revendication 1, dans lequel le canal guide de lumière (300) comprend une pluralité de microprismes adaptés pour collecter la lumière émise depuis la source de lumière (105, 110, 115) et diriger la lumière collectée jusqu'au guide de lumière (105).

7. Accessoire de l'une quelconque des revendications précédentes, dans lequel le guide de lumière (205) est une pluralité de guides de lumière ayant chacun :
une première extrémité (204) qui est couplée de façon communicante à la surface externe (225) de l'étui (201), et
une deuxième extrémité (206) qui est couplée de façon communicante à la surface interne (230) de l'étui (201) .

8. Accessoire de l'une quelconque des revendications précédentes, dans lequel l'étui (201) comporte :
un premier panneau (210) ayant une surface extérieure (225) et étant dans un premier plan de l'étui (201) ; et
un deuxième panneau (213) ayant une surface intérieure (230) et étant dans un deuxième plan différent du premier plan ; et
dans lequel le guide de lumière (205) est exposé à la surface extérieure (225), et la première extrémité (204) est couplée de façon communicante au premier panneau (210) et la deuxième extrémité (206) est couplée de façon communicante à la surface intérieure (230) du deuxième panneau (213).

9. Accessoire de la revendication 8, dans lequel le premier panneau est dans un premier plan orienté perpendiculairement au deuxième plan.

10. Système destiné à diriger la lumière émise depuis un dispositif électronique (100) jusqu'à un accessoire (200), le système comprenant :
un dispositif électronique (100) comprenant une source de lumière (105, 110, 115) ; et
l'accessoire (200) selon l'une quelconque des revendications précédentes, l'accessoire (200) étant adapté pour recevoir le dispositif électronique (100).

11. Système de la revendication 10, dans lequel la source de lumière est un élément parmi un écran d'affichage (105), un clavier éclairable (115), et une diode électroluminescente (110) couplée de façon communicante au dispositif électronique (100).
